# DEMANDE DE BREVET EUROPEEN

(11) **EP 2 075 592 A1**
(43) Date de publication de la demande: **01.07.2009**
(21) Numéro de dépôt: 07301745.1
(22) Date de dépôt: 27.12.2007
(51) Int. Cl.: G01S 5/00, G06F 17/30

(54) **Prise de vue avec intégrité associée**

(71) Demandeur: Alcatel Lucent, 75008 Paris (FR)
(72) Inventeur: Poire, Philippe, 31830 Plaisance du Touch (FR)
(74) Mandataire: Hedarchet, Stéphane

(57) **Abrégé**

Dispositif (1) de prise de vue apte à capturer au moins une image (9) d'un objet (10), comprenant :
- des moyens de réception (2) de signaux (4) provenant d'un système de positionnement par satellites,
- des moyens de réception (2) de signaux provenant d'un système d'augmentation (EGNOS) pouvant assurer l'intégrité des signaux provenant du système de positionnement par satellites,
- des moyens de calcul (5) de la position et de la date à laquelle la capture de l'image de l'objet a été faite,

des moyens (14) de cryptage des données desdites position et date et d'insertion desdites données de position et date dans un fichier de données (11) comportant ladite image.
Procédé associé.

## Description

La présente invention concerne un procédé et un dispositif de prise de vue apte à capturer au moins une image d'un objet.

Le but de la présente invention est de fournir une image d'un objet avec un niveau d'intégrité et de fiabilité suffisant pour être notamment acceptable à titre de preuve devant une cour de justice.

Les applications de l'invention se trouvent en particulier, mais non limitativement, dans le domaine des services d'inspection de conteneurs, dans celui de la recherche d'indices et d'éléments de preuve lors d'une enquête de police, dans le domaine des recherches de preuves dans le cadre d'un accident, de voiture par exemple, en l'absence d'officiers de police.

A titre d'exemple, prenons celui des services d'inspection de conteneurs. Ce type de services consiste en la surveillance de conteneurs lors de leur chargement. Si l'acheteur et le vendeur des marchandises chargées dans le conteneur ne peuvent pas être présents durant le chargement du conteneur, ces parties peuvent demander l'assistance de tels service d'inspection de conteneurs pour certifier que l'opération de chargement s'est correctement déroulée, sans aucune fraude.

Cependant, des preuves sont nécessaires pour de nombreuses étapes de l'opération de chargement : vérification du conteneur alors vide, conteneur semi-rempli, conteneur rempli avec portes ouvertes, et enfin conteneur avec les portes fermées et scellées. Il n'existe pas aujourd'hui de moyen permettant l'enregistrement d'images d'une opération de chargement et pouvant certifier de façon fiable et intègre la position et le temps de chaque opération.

L'invention a pour but de remédier aux problèmes cités.
A cet effet, l'invention a pour objet un dispositif de prise de vue apte à capturer au moins une image d'un objet, comprenant :
- des moyens de réception de signaux provenant d'un système de positionnement par satellites,
- des moyens de réception de signaux provenant d'un système d'augmentation, du type EGNOS, pouvant assurer l'intégrité des signaux provenant du système de positionnement par satellites,
- des moyens de calcul de la position et de la date à laquelle la capture de l'image de l'objet a été faite,
- des moyens de cryptage des données desdites position et date et d'insertion desdites données de position et date dans un fichier de données comportant ladite image.

Selon un mode de réalisation, le dispositif selon l'invention comporte des moyens d'émission pour émettre ledit fichier de données à une entité extérieure de surveillance, cette dernière étant apte à visualiser le contenu du fichier.

L'invention a également pour objet un procédé de prise de vue apte à capturer au moins une image d'un objet, comprenant :
- une étape de réception de signaux provenant d'un système de positionnement par satellites,
- une étape de réception de signaux provenant d'un système d'augmentation, du type EGNOS, pouvant assurer l'intégrité des signaux provenant du système de positionnement par satellites,
- une étape de calcul de la position et de la date à laquelle la capture de l'image de l'objet a été faite,
- une étape de cryptage des données desdites position et date et d'insertion desdites données de position et date dans un fichier de données comportant ladite image.

Selon un mode de réalisation, le procédé selon l'invention comporte en outre une étape d'émission pour émettre ledit fichier de données à une entité extérieure de surveillance, cette dernière étant apte à visualiser le contenu du fichier

D'autres caractéristiques, détails et avantages de l'invention ressortiront plus clairement de la description détaillée donnée ci-après à titre indicatif en relation avec la figure unique sur laquelle :
la figure unique représente schématiquement un dispositif de prise de vue selon
un mode de réalisation de l'invention.

Le dispositif 1 de la figure est, dans ce mode de réalisation, un assistant numérique dit PDA ("Personal Digital Assistant"). Bien entendu, on peut imaginer tout autre exemple de dispositif comme alternative au dispositif 1 tel qu'un téléphone mobile, dans la mesure où il intègre les modules essentiels de l'invention ainsi qu'ils seront décrits plus en avant.

Le dispositif 1 comporte un récepteur GNSS 2 (Global Navigation Satellite System) apte à décoder les signaux 4 émis par les satellites 3 de navigation GPS, GALILEO, EGNOS (European Geostationary Navigation Overlay Service), WAAS (Wide Area Augmentation System), MSAS (MTSAT Satellite-based Augmentation System). Ces signaux 4 de navigation satellites permettent, de façon connue en soi, d'obtenir les pseudo-distances et messages de navigation associés. On notera également que le système EGNOS contrôle de façon permanente la constellation de satellites GPS et fournit un service d'intégrité en temps réel et des données de correction pour les satellites des constellations GPS et GALILEO permettant de la sorte un positionnement garanti de haute précision.

De manière à garantir la réception des signaux d'intégrité EGNOS (et WAAS en, Amérique du Nord ainsi que MSAS au Japon), un processeur 5 du dispositif 1 est muni d'une technologie permettant la réception et le traitement de signaux 6 de sources complémentaires 7. Ces liens de transmission complémentaires peuvent provenir de la diffusion du signal EGNOS sur les canaux radio FM ou GSM. La source complémentaire peut également emprunte la technologie SISNeT (Signal In Space through the Internet). Ainsi, le dispositif 1 muni d'un accès sans fil à Internet via une technologie adéquate connue par l'Homme du Métier peut bénéficier de signaux d'augmentation EGNOS même dans des situations où les satellites géostationnaires EGNOS ne sont pas visibles, i.e en haute altitude ou en milieu suburbain et canyons urbains.

La dissémination des Signaux EGNOS peut également procéder par d'autres moyens non spatiaux tels que le service DAB ou RDS. Cette évolution dénommée EGNOS Data Access System (EDAS) permettant à des fournisseurs de services d'exploiter ces signaux disponibles pour assurer une qualité de services supérieure.

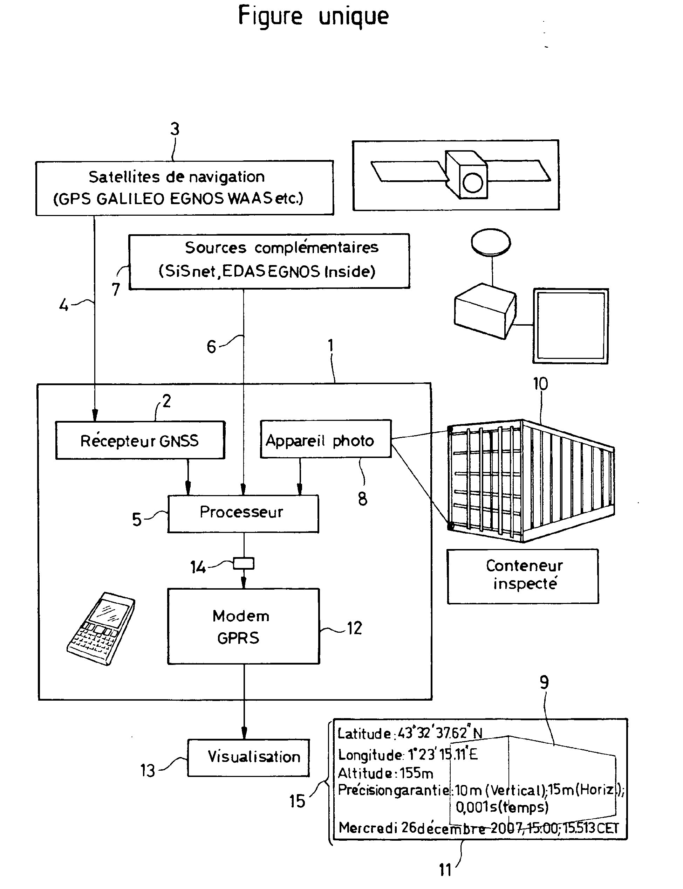

Un appareil photo 8 intégré au dispositif 1 permet de prendre une photo à tout instant. Dans l'exemple d'application de surveillance de conteneurs, l'appareil 8 prend, à un instant t donné qui sera mémorisé par le processeur 5, une photo 9 d'un conteneur 10 en train d'être inspecté.

En utilisant les données de pseudo-distances et de messages de navigation, le processeur 5 calcule les données 15 de position et de date exactes avec les précisions garanties associées. La précision garantie, exprimée en mètres pour la position et en secondes pour le temps, est une variable qui est calculée chaque fois qu'une image est prise. La garantie de la précision est fournie par le service utilisé, du type Galiléo.

Les données 15 de position et de date sont alors cryptées dans le fichier d'image prise par un module 14 de cryptage. D'autres données peuvent être inclues dans le fichier d'image telles que la pseudo-distance mesurée par le récepteur GNSS 2 et le message de navigation. Différentes méthodes peuvent être utilisées pour le cryptage des données de position et de date. Pour une meilleure résistance contre le déchiffrement illégal du dispositif 1, l'appareil photo 8 et le processeur 5 sont basés sur une même puce, de manière à rendre plus difficile la séparation des données {position ; date} avec l'image.

Le fichier final, illustré schématiquement par l'encadré 11, est transmis, via un modem GPRS 12, à une entité extérieure 13 de surveillance, cette dernière étant apte à visualiser le contenu du fichier sans pouvoir modifier le contenu du fichier 11. Ainsi, l'entité 13, qui peut être par exemple l'acheteur des marchandises contenues dans le conteneur 10, peut vérifier que ce dernier à été effectivement scellé à l'heure indiquée sur la photo. Les données de position et de date sont infalsifiables puisqu'elles ont été cryptées dans le fichier et ne peuvent donc pas en être séparées. En outre, le processeur doté de technologies de réception de signaux EGNOS ainsi que de réception et de traitement de signaux complémentaires, assure l'intégrité des données de positionnement, et ceci sans faille. Ainsi, le dispositif 1 n'est même pas soumis aux risques de pannes qui peuvent surgir dans le système GPS ; en effet, il est répertorié un à deux cas de panne par an dans les systèmes GPS. Le dispositif 1 ne souffre de tels risques.

Enfin, l'impossibilité de falsification des données associées à l'image rend le fichier utile come élément de preuve.

## Revendications

1. Dispositif (1) de prise de vue apte à capturer au moins une image (9) d'un objet (10), comprenant :
- des moyens de réception (2) de signaux (4) provenant d'un système de positionnement par satellites,
- des moyens de réception (2) de signaux provenant d'un système d'augmentation (EGNOS) pouvant assurer l'intégrité des signaux provenant du système de positionnement par satellites,
- des moyens de calcul (5) de la position et de la date à laquelle la capture de l'image de l'objet a été faite,
- des moyens (14) de cryptage des données desdites position et date et d'insertion desdites données de position et date dans un fichier de données (11) comportant ladite image.

2. Dispositif selon la revendication 1, **caractérisé en ce que** le dispositif (1) comporte des moyens d'émission (12) pour émettre ledit fichier de données (11) à une entité (13) extérieure de surveillance, cette dernière étant apte à visualiser le contenu du fichier.

3. Procédé de prise de vue apte à capturer au moins une image (9) d'un objet (10), comprenant :
- une étape de réception de signaux (4) provenant d'un système de positionnement par satellites,
- une étape de réception de signaux provenant d'un système d'augmentation (EGNOS) pouvant assurer l'intégrité des signaux provenant du système de positionnement par satellites,
- une étape de calcul de la position et de la date à laquelle la capture de l'image de l'objet a été faite,
- une étape de cryptage des données desdites position et date et d'insertion desdites données de position et date dans un fichier de données comportant ladite image.

4. Procédé selon la revendication 3, **caractérisé en ce qu'**il comporte en outre une étape d'émission pour émettre ledit fichier de données (11) à une entité (13) extérieure de surveillance, cette dernière étant apte à visualiser le contenu du fichier.
